# EUROPÄISCHE PATENTSCHRIFT

(11) **EP 2 186 755 B1**
(45) Veröffentlichungstag und Bekanntmachung des Hinweises auf die Patenterteilung: **30.05.2012**
(21) Anmeldenummer: 09010803.6
(22) Anmeldetag: 24.08.2009
(51) Int. Cl.: B65G 17/06

(54) **Transportvorrichtung für druckempfindliche lange Teile**
Transport device for pressure-sensitive long parts
Dispositif de transport pour pièces longitudinales sensibles à la pression

(30) Priorität: 27.08.2008 DE 102008039903
(43) Veröffentlichungstag der Anmeldung: 19.05.2010
(73) Patentinhaber: Jarus GmbH, 83135 Schechen (DE)
(72) Erfinder: Altenburger, Joseph, 83026 Rosenheim (DE); Schuster, Rudolf, 85551 Kirchheim (DE)
(74) Vertreter: Zeitler - Volpert - Kandlbinder

(56) Entgegenhaltungen:
- EP-A2- 1 036 747
- FR-A- 1 410 191
- NL-A- 9 101 059
- US-A- 559 370
- US-A- 2 342 471
- US-A- 3 021 939
- US-A- 3 815 725

## Beschreibung

Für den Transport von Teilen, Rohren und Bändern werden neben Transportbändem und Transportrollen auch Kettenförderer eingesetzt. (DE202005021461U1). Transportbänder bieten durch ein breites Spektrum von Materialien aus der Kunststofftechnik preiswerte Lösungen bei kleinen Beanspruchungen und bei gleichförmigen Bewegungen des Transportbandes.
Transportrollen eignen sich auch für höhere Belastungen. Die unterbrochenen Auflage eignet sich nur für lange bzw. großflächige Transportteile. Wegen der spezifischen Flächenpressung durch punktuelle bzw. lineare Beanspruchung dürfen solche Teile jedoch nicht druckempfindlich sein.

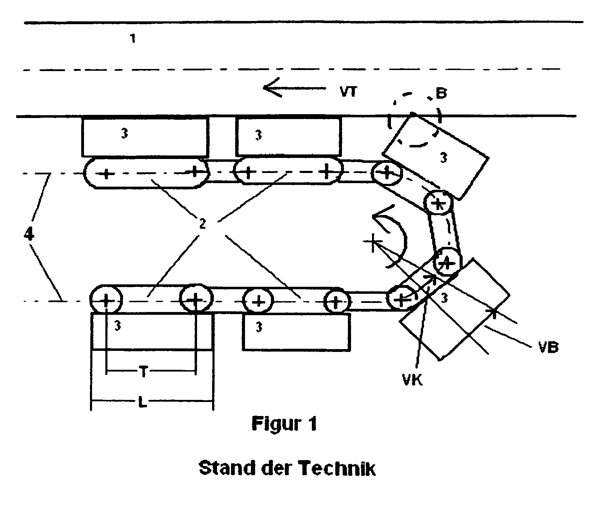

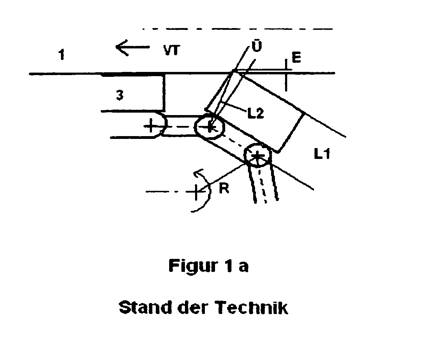

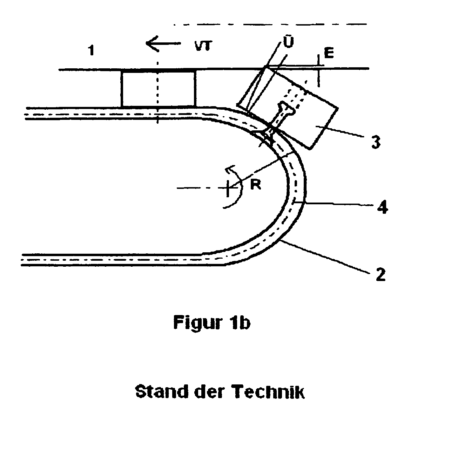

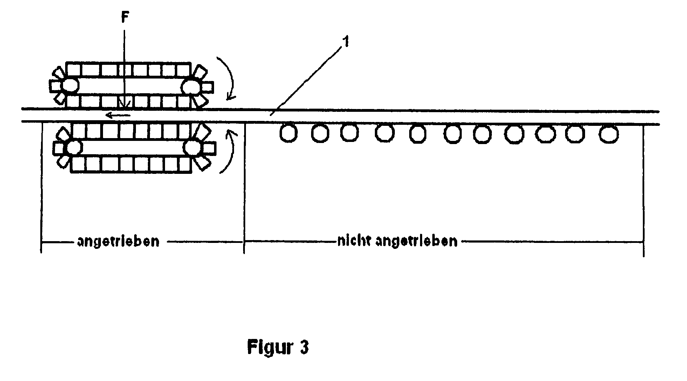

In Figur 1 ist eine Transportvorrichtung nach dem Stand der Technik gezeigt. Ketten mit an das Transportgut angepassten Aufsätzen 3 können die Flächenpressung reduzieren. Dies ermöglicht auch den Einsatz als Antriebseinheit bei nicht angetriebenen Rollenbahnen bei langen Teilen wie z.B. extrudierten Teilen wie Rohren. Durch die Reduzierung der Flächenpressung kann durch zusätzlichen Andruck F von oben die Antriebskraft erhöht werden. (Fig. 3).
Bei Kettenantrieben ist die von der Kettengeschwindigkeit VK abweichende Geschwindigkeit VB des Berührpunktes B bei der Umlenkung zu beachten, vgl. Figur 1, VT=VK<VB. Die erhöhte Geschwindigkeit VB führt beim Kontakt mit dem Transportgut zu einer Relativbewegung zwischen Transportgut 1 und Berührpunkt B.
Wenn, wie in Figur 1 und 1a gezeigt, die Länge L des Aufsatzes 3 größer als die Kettenteilung T ist, also der Aufsatz 3 einen Überstand Ü aufweist, wird L2 > L1 und es kommt zu einem Eindringen des Aufsatzes in das zu transportierende Gut 1 im Berührpunkt B mit einer Eindringtiefe von E=√(L1²+U²)-L1. (Fig. 1a). Verschleiß und eventuelle Beschädigungen des Transportgutes sind die Folge.

Die NL 9 101 059 A offenbart ein Förderband, das aus einzelnen Transportstreben besteht, die zwischen zwei angetriebenen Transportketten verlaufen. Bei den Transportketten handelt es sich um herkömmliche Gliederketten, deren Kettenglieder über die Transportstreben miteinander verbunden sind. Die Transportstreben sind aus einfachen runden Stäben aufgebaut. Derartige Transportstreben weisen eine linienförmige (und somit keine flächige) Kontaktstelle mit dem darauf transportierten Transportgut auf. Ein solches Förderband eignet sich daher lediglich für den Transport von großflächigen und unempfindlichen Transportgütern.

Die EP 1 036 747 A2 offenbart eine Transportvorrichtung gemäß dem Oberbegriff des Anspruchs 1. Im Berühungpunkt der Transportvorrichtung mit dem Transportgut kann das Transportgut beschädigt werden.

Der Erfindung liegt die Aufgabe zugrunde, eine Transportvorrichtung nach dem Oberbegriff des Anspruchs so auszubilden, dass die oben dargestellten Nachteile vermieden werden.

Dies wird mit Hilfe der kennzeichnenden Merkmale des Anspruchs 1 erreicht. Vorteilhafte Ausbildungen sind in den untergeordneten Ansprüchen beschrieben.

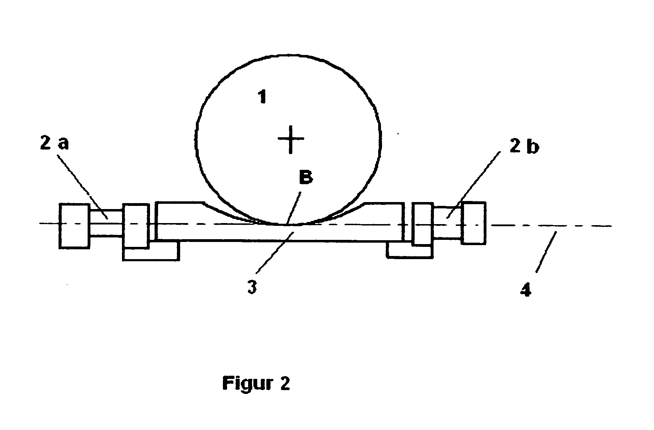

Die erfindungsgemäße Transportvorrichtung wird im folgenden anhand der Figur 2 beschrieben.

Auf beiden Seiten des Transportgutes, in diesem Fall ein zu transportierendes Rohr 1, ist je ein Transportmittel 2a, 2b angeordnet, beim Ausführungsbeispiel nach Figur 2 sind es zwei Endlosketten.
Genauso gut können auch zwei Zahn- oder Flachriemen als Transportmittel verwendet werden, wie in Figur 1 b gezeigt. Bei der Verwendung von Zahn- oder Flachriemen ist die Mittellinie 4 des Transportmittels 2 die neutrale Faser, d.h. die Linie an der der Riemen bei der Umlenkung keine Längenänderung erfährt. Die Aufbauten 3 sind an dem Flach-oder Zahnriemen mittels Bohrungen und Nieten befestigt, wie in Figur 1 b schematisch gezeigt.
Auf den Kettengliedern im Ausführungsbeispiel nach Figur 2 sind die das zu transportierende Gut 1 unterstützenden Aufbauten 3 so angeordnet, dass sich die Mittellinie 4 der Endlosketten und der Berührpunkt B des Aufbaus 3 in einer Ebene bzw. auf gleicher Höhe befinden. Dadurch wird erreicht, dass die Geschwindigkeit VT des Transportgutes 1 auch im Umlenkpunkt der Kette gleich der Kettengeschwindigkeit VK und der Geschwindigkeit VB der Aufbauten sind. So kann das Transportgut 1 nicht durch eindringende Aufbauten beschädigt werden sofern die Länge L der Aufbauten 3 nicht größer als die Kettenteilung T ist.
Somit verhindert die Bemessungsvorschrift nach Anspruch 2 das Eindringen der Aufbauten in das Transportgut.

Eine Ausführung der Aufbauten der Transportvorrichtung, bei der das Material der Aufbauten (3) verschleißfest ist und über einen hohen Reibwert verfügt, stellt eine lange Nutzungsdauer der Transportvorrichtung und eine effektive Vorschubkraft bei gleichzeitig verringerter Flächenpressung sicher.

Bei besonders leichten Transportgütern empfiehlt sich, wie im linken Teil der Figur 3 gezeigt, die erfindungsgemäß vorgesehene Anordnung einer zweiten Transportvorrichtung wodurch der Anpressdruck F des Transportgutes auf die Aufbauten des Transportmittels erhöht wird und ein Schlupf zwischen Transportgut und Aufbauten verhindert wird.

Bei langen Transportstrecken können, wie im Anspruch 3 beschrieben, eine oder mehrere kurze aktive Antriebseinheiten mit einer oder mehreren nicht angetriebenen passiven Strecken kombiniert werden. (Figur 3).

## Patentansprüche

1. Transportvorrichtung für ein druckempfindliches langes Transportgut (1) mit einem Transportmittel (2), das sich unter dem Transportgut (1) in einer Endlosschleife bewegt und aus Kettengliedern, Zahnriemen oder Flachriemen besteht, wobei an das Transportmittel (2) an die Form des Transportgutes angepasste Aufbauten (3) angebracht sind, wobei auf das Transportgut (1) eine zusätzlich zu dessen Eigengewicht wirkende Andruckkraft (F) ausgeübt wird, indem eine weitere Transportvorrichtung mit Transportmitteln (2) und angepassten Aufbauten (3) über dem Transportgut (1) angeordnet ist und mit gleicher Transportgeschwindigkeit angetrieben wird, wobei die Transportmittel (2) aus zwei sich neben dem Transportgut (1) befindlichen Teilen bestehen, **dadurch gekennzeichnet, dass** die angepassten Aufbauten (3) so ausgebildet und so zwischen den beiden Teilen (2a, 2b) des Transportmittels angebracht sind, dass sich die Berührungspunkte (B) der Aufbauten mit dem Transportgut (1) in der Mittellinie (4) des Transportmittels befinden, wobei die Mittellinie (4) bei einem Transportmittel in Form von Zahnriemen oder Flachriemen die neutrale Faser ist und bei einem Transportmittel aus Kettengliedern von den Gelenkachsen der Kettenglieder gebildet ist.

2. Transportvorrichtung nach Anspruch 1, **dadurch gekennzeichnet, dass** das Transportmittel aus Kettengliedern besteht und die Länge (L) der angepassten Aufbauten (3) nicht grösser als die Teilung (T) der Kettenglieder ist.

3. Transportsystem nach Anspruch 1 oder 2, **dadurch gekennzeichnet, dass** eine oder mehrere Transportvorrichtungen nach einem der Ansprüche 1 bis 2 als relativ kurze aktive Antriebseinheiten mit einer oder mehreren nicht angetriebenen, passiven, längeren Strecken kombiniert sind.

## Claims

1. Transport device for a pressure-sensitive long transported good (cargo) (1) with a means of transport (2) which moves under the transported good (1) in an infinite loop and which consists of chain links, cam belts or flat belts, whereupon adapted superstructural parts (3) are applied on the mean of transportation (2) and on the form of the cargo (1), whereupon on the cargo (1) to it s netweight an additional pressing force (F) is being executed, by a further transport device with means of transport (2) and adapted superstructures (3) above the transported good (1) and is driven at the same transport speed, (thereby **characterized**), whereupon the transport devices (2) consist of two adjacent operating pieces to the transported good (1)located parts, that the adapted superstructures (3) are being attached in a certain way that in between the two pieces (2a,2b) of the transport devices, that the point of contact (B) of the superstructural parts are located with the transport good (1) within the center line (4) of the transport devices, wherein the center line (4) at a transport means in the form of toothed belts or flat belts is the neutral fiber and formed at a transport means of chain links of the joint axes of the chain links.

2. Transport device according to claim 1, thereby **characterized**, that the transport means consists of chain links and the length (L) of the adapted superstructures (3) is not greater than the division (T) of the chain links.

3. Transport system according to claim 1 or 2, thereby **characterized**, that one or more transport devices according to one of the two claims 1 to 2 as relatively short drive units are combined with one or more non-driven, passive longer distances.

## Revendications

1. Mécanisme de transport pour un fret (1) lequel est sensible à la pression et long, avec un moyen de transport (2) que se déplace sous la marchandise transportée (1) dans une boucle continu et se compose de maillons de chaîne, des courroies dentées oud des courroies plates, cependant aux moyens de transport (2) à la forme de transportés superstructures adaptés (3) sont montés, cependant la marchandise transportée (1) une supplémentaire appliqué à son propre poids à action de force (F) par un appareil de transport en outre des moyens de transport (2) et adapté superstructures (3) au-dessus des marchandises transportées (1) est agencé et est entraîné à la vitesse de transport même, (ainsi **caractérisé**) cependant les moyens de transport (2) consister en deux adjacente pièces à la marchandise transportée (1) de pièces situées, que les superstructures adaptés (3) sont appliqués en sorte que les deux pièces (2a, 2b) des moyens de transport sont positionnés que les points de contact (B) de la superstructure avec la marchandise transportée (1) dans la ligne médiane (4) des moyens de transport sont situés, dans lequel la ligne centrale (4) à un moyen de transport sous la forme de courroies dentées ou des courroies plates la fibre neutre est formée et un moyen de transport de maillons de chaîne des axes d'articulation des maillons de chaîne.

2. Dispositif de transport selon la revendication 1, **caractérisé en ce que** le moyen de transport est constitué de maillons de chaîne et la longueur (L) des superstructures adaptés (3) n'est pas supérieur que la division (T) des maillons de chaîne.

3. Système de transport selon la revendication 1 ou 2, ainsi **caractérisé en ce qu'**un ou plusieurs dispositifs de transport selon l'une des revendications 1 à 2 comme relativement actifs courtes ensemble propulsif sont combinés avec un ou plusieurs non entraînés, passif, les distances très longues.
